# EUROPÄISCHE PATENTANMELDUNG

(11) **EP 2 708 744 A1**
(43) Veröffentlichungstag der Anmeldung: **19.03.2014**
(21) Anmeldenummer: 12184098.7
(22) Anmeldetag: 12.09.2012
(51) Int. Cl.: F03G 6/06, F24J 2/07

(54) **Solarthermie-Anlage**

(71) Anmelder: Wieghardt, Kai, 44869 Bochum (DE); Cordes, Sebastian, 51067 Köln (DE); Langenberg, Georg, 40225 Düsseldorf (DE); Prosinecki, Tobias, 52066 Aachen (DE)
(72) Erfinder: Wieghardt, Kai, Dr., 44869 Bochum (DE); Prosinecki, Tobias, 52066 Aachen (DE)
(74) Vertreter: Patentanwälte ter Smitten Eberlein Rütten Partnerschaftsgesellschaft

(57) **Zusammenfassung**

Die Erfindung bezieht sich auf eine modulare Solarthermie- Anlage (10) zur Generierung elektrischer Energie, mit mindestens zwei selbstständigen Solarmodulen (20,201...209). Jedes Solarmodul (20,201...209) weist einen Turmempfänger (30) mit einem auf einem Turm (31) angeordneten Solarempfänger (32), ein Heliostaten- Feld (22, 221...229), das dem Turmempfänger (30) zugeordnet ist, und einen Warm- Zwischenspeicher (42) zum Speichern der durch den Turmempfänger (30) aufgenommenen Wärmeenergie auf. Der Solarempfänger (32) und der Warm-Zwischenspeicher (42) werden von einer Wärmeträger-Flüssigkeit durchflossen. In einem zentralen Kraftwerk (14), dessen Zulauf mit den Warm- Zwischenspeichern fluidisch (15) verbunden ist, wird die thermische Energie der Wärmeträger-Flüssigkeit durch einen Generator (18) in elektrische Energie umgewandelt,

## Beschreibung

Die Erfindung bezieht sich auf eine Anlage zur Erzeugung elektrischer Energie.

In einer Solarthermie- Anlage zur Erzeugung elektrischer Energie wird durch Konzentration von Sonnenstrahlung ein Wärmeträger-Fluid erwärmt, das seinerseits einem Dampf-Kraftwerk zugeführt wird, in dem die Wärmeenergie in elektrische Energie umgewandelt wird.

Neben der Parabolrinnen- Technologie wurde in bereits realisierten solarthermischen Anlagen die sogenannte Solarturm- Technologie eingesetzt, bei der ein Heliostaten-Feld die Sonnenstrahlung auf einen Solarempfänger richtet, in dem eine Wärmeträger-Flüssigkeit, beispielsweise Flüssigsalz, erwärmt wird. Die Speicherung der Wärmeenergie in einer Wärmeträger-Flüssigkeit mit einer hohen Wärmekapazität bietet die Möglichkeit einer Wärmespeicherung, so dass ein angeschlossenes Kraftwerk sowohl Grundlast als auch Spitzenlast bedienen kann. Allerdings haben Wärmeträger-Flüssigkeiten die Eigenschaft, unterhalb des Gefrierpunktes zu erstarren, so dass die Anlage bei Ausfall der Sonnenstrahlung, beispielsweise nachts, entweder entleert oder geheizt werden muss.

Der Solarempfänger kann oberhalb des Heliostaten-Feldes auf einem Turm angeordnet sein, kann jedoch alternativ auch bodenseitig angeordnet sein. Aus US 2011 259 320 A1 ist eine modulare Solarthermie- Anlage bekannt, die mehrere Turmempfänger mit jeweils einem bodenseitigen Solarempfänger aufweist, wobei in dem Solarempfänger die Sonnenenergie auf eine Wärmeträger-Flüssigkeit übertragen wird.

Für die Realisierung von Solarthermie- Anlagen sind die extrem hohen Investitionskosten ein seriöses Hindernis, das einer schnellen Verbreitung derartiger Solarthermie-Anlagen entgegensteht.

Aufgabe der Erfindung ist es demgegenüber, eine preiswert herstellbare und effiziente Solarthermie- Anlage zu schaffen.

Diese Aufgabe wird durch eine modulare Solarthermie-Anlage mit den Merkmalen des Anspruchs 1 gelöst.

Die erfindungsgemäße Solarthermie-Anlage ist modular aufgebaut ist, und weist mindestens zwei selbstständige Solarmodule auf. Jedes Solarmodul weist einen Turmempfänger mit einem Solarempfänger auf, der auf einem Turm oder am Boden angeordnet sein kann. Jedes Solarmodul weist ein Heliostaten-Feld mit einer Vielzahl von nachgeführten Heliostaten auf, die die Sonnenstrahlung auf den Turmempfänger bzw. den Solarempfänger umlenken. Als Wärmeträger dient eine Flüssigkeit, und ist bevorzugt Flüssigsalz vorgesehen. Ferner weist jedes Solarmodul einen eigenen Warm-Zwischenspeicher zur Speicherung einer gewissen Menge der erwärmten Wärmeträger-Flüssigkeit auf. Der Warm-Zwischenspeicher ist möglichst nah an dem zugeordneten Turmempfänger angeordnet, das heißt, besonders bevorzugt nicht mehr als wenige 100 m entfernt von dem Turmempfänger.

Schließlich weist die Solarthermie-Anlage ein zentrales Kraftwerk auf, in dem die thermische Energie der Wärmeträger-Flüssigkeit durch einen Turbinengenerator in elektrische Energie umgewandelt werden kann. Der Wärmeträger- Zulauf des Kraftwerks ist mit den Warm- Zwischenspeichern der Solarmodule fluidisch verbunden. Dem zentralen Kraftwerk kann, muss jedoch nicht notwendigerweise, ein eigener Hauptspeicher für die Wärmeträger- Flüssigkeit zugeordnet sein. Ferner kann das Kraftwerk einen Sekundär- Wärmeträgerkreislauf aufweisen, der als Wärmeträger Wasser aufweist und der Dampferzeugung dient.

Dadurch, dass jedem Solarmodul ein eigener dezentraler Zwischenspeicher für die erwärmte Wärmeträger-Flüssigkeit zugeordnet ist, wird ein sukzessiver Aufbau der Solarthermie-Anlage bzw. eine sukzessive Erweiterung der Anlage um weitere Solarmodule ermöglicht. Hierbei kann ein zentraler Warm- Zwischenspeicher für das Kraftwerk entfallen. Die kleinstmögliche Ausbaustufe der Anlage kann aus dem zentralen Kraftwerk und wenigen Solarmodulen bestehen, im Extremfall aus dem Kraftwerk und nur einem einzigen primären Solarmodul. Bereits in der minimalsten Ausbaustufe ist die Anlage funktionsfähig, wobei die Investitionskosten relativ gering sind und nur einen Bruchteil der Investitionskosten der Solarthermie-Anlage in der maximalen End-Ausbaustufe sind.

Die Modularität der Solarmodule führt zu einem hohen Gasamt-Wirkungsgrad der Anlage, da das Heliostaten-Feld eines Solarmoduls relativ klein und kompakt ist, so dass wiederum die mittlere Entfernung der Heliostaten von dem Turmempfänger relativ gering ist. Vorzugsweise liegt die individuelle Entfernung aller Heliostaten eines Heliostaten-Feldes von dem zugeordneten Turmempfänger unter 700 m, und besonders bevorzugt unter 500 m. Durch die relativ geringe individuelle bzw. mittlere Entfernung der Heliostaten von dem zugeordneten Turmempfänger fällt die atmosphärische Abschwächung der Sonnenstrahlung zwischen dem Heliostaten-Feld und dem zugeordnen Turmempfänger um bis zu 20-30 % geringer aus, als bei nicht-modular aufgebauten Anlagen, bei denen einem Kraftwerk ein einziger Turmempfänger mit einem einzigen Heliostaten-Feld zugeordnet ist, das einen Durchmesser von bis zu 3 km und mehr aufweisen kann.

Durch die erhebliche Reduzierung der atmosphärischen Abschwächung der Sonnenstrahlung ist die modulare Solarthermie- Anlage auch für Regionen geeignet, in denen keine optimalen atmosphärischen Bedingungen vorgefunden werden. Durch die geringe mittlere Entfernung der Heliostaten von dem Solarempfänger ist auch die mittlere Strahlungsgeometrie-Qualität besser als bei einem größeren Heliostaten-Feld, da weniger gegenseitige Abschattung der Heliostaten und eine verringerte Strahlaufweitung auftreten. Die optische Präzision der Heliostaten kann entsprechend reduziert werden, was sich kostenmindernd auswirkt.

Gemäß einer bevorzugten Ausgestaltung liegt die Höhe des den Solarempfänger tragenden Turms unter 200 m, und besonders bevorzugt unter 175 m, so dass auch das untere Ende des Solarempfängers nicht höher als 200 m bzw. 175 m angeordnet ist. Auch der Turm stellt bei einem Turmempfänger einen gewissen Kostenfaktor dar, der wesentlich durch die Turmhöhe beeinflusst wird. Durch die Modularität der Solarmodule und die damit einhergehende Kompaktheit der Heliostaten-Felder ist eine relativ geringe Turmhöhe ausreichend, so dass die Kosten für den Turm erheblich reduziert werden können.

Vorzugsweise ist jedem Solarmodul ein Kalt- Zwischenspeicher zugeordnet, der mit einem Kraftwerk- Ablauf fluidisch verbunden ist. Hierdurch wird die Zwischenspeicherung der Wärmeenergie optimiert, da die Wärmeträger-Flüssigkeit während der Wärmegewinnung von dem Kalt-Zwischenspeicher durch den Solarempfänger in den Warm-Zwischenspeicher gepumpt werden kann, und während der Wärmeabgabe von dem Warm-Zwischenspeicher zu dem Kraftwerk und zurück in den Kalt-Zwischenspeicher gepumpt werden kann. Auf diese Weise kann das Kraftwerk bei Bedarf kontinuierlich und bedarfsgerecht elektrische Energie liefern, kann also sowohl Grundlast, Mittellast als auch Spitzenlast bedienen. Die Warm- Zwischenspeicher und die Kalt- Zwischenspeicher aller Solarmodule sind bevorzugt fluidisch jeweils parallel miteinander verbunden, so dass sie gemeinsam nach außen bzw. im Bezug auf das Kraftwerk als ein einziger großer Kalt-Wärmespeicher und Warmwärmespeicher erscheinen.

Vorzugsweise sind die Solarempfänger jeweils als Hohlraum-Solarempfänger mit einer unterliegenden Strahlungsöffnung ausgebildet, die beispielsweise in einer Horizontalebene liegt. Ein Hohlraum-Solarempfänger hat gegenüber einem sogenannten externen Solarempfänger, der ausschließlich auf seiner Außenseite Wärme aufnimmt und keine Kavität aufweist, den Vorteil erheblich verringerter Wärmeverluste. Neben einer Verbesserung des Wirkungsgrades haben die verringerten Wärmeverluste insbesondere zur Folge, dass bei fehlender Sonnenstrahlung die Abkühlung des Solarempfängers erheblich verzögert wird, so dass das Problem des Einfrierens bzw. Erstarrens der Wärmeträger-Flüssigkeit entschärft oder vollständig vermieden werden kann.

Gemäß einer bevorzugten Ausgestaltung sind die Turmempfänger aller Solarmodule identisch ausgebildet, wohingegen die Heliostaten-Felder nicht notwendigerweise identisch zueinander ausgebildet sind. Das exakte Wärmeverhalten eines Solarempfängers, und insbesondere eines als Hohlraum- Solarempfänger ausgebildeten Solarempfängers, ist nach dem Stand der Technik rechnerisch praktisch nicht genau bestimmbar. Bei Hohlraum- Solarempfängern ergibt sich hieraus die Notwendigkeit, von jeder Hohlraum- Solarempfänger- Konfiguration zunächst ein Modell bauen zu müssen, um im Labor die Leistungsparameter des Solarempfänger ermitteln zu können. Durch die Standardisierung des Turmempfängers einschließlich des Solarempfängers wird der Aufwand für die Ermittlung des Wärmeverhaltens auf ein unvermeidbares Minimum reduziert. Andererseits kann jedes Heliostaten-Feld individuell an die Gegebenheiten und Randbedingungen bezüglich der Strahlungsintensität, der geographischen Breite, des Bodenprofils, der Grundstücks-Begrenzung etc. angepasst bzw. bezüglich der Kosten und/oder des Wirkungsgrades optimiert werden.

Vorzugsweise ist mindestens ein Heliostat eines Heliostaten-Feldes derart ausgestaltet, dass der Heliostat die Sonnenstrahlung auf mindestens zwei verschiedene benachbarte Turmempfänger richten kann. Der Heliostat wird stets so ausgerichtet, dass die Wärmeausbeute anlagenbezogen optimal ist. Hierdurch kann der Anlagen- Wirkungsgrad erhöht werden.

Vorzugsweise ist dem Kraftwerk ein eigener Warm-Zwischenspeicher zugeordnet, der eine volumetrische Kapazität aufweist, die kleiner ist als 1/3 der volumetrischen Kapazität aller Warm-Zwischenspeicher aller Solarmodule zusammen. Gemäß einer besonders bevorzugten Ausgestaltung ist dem Kraftwerk überhaupt kein eigener Warm-Zwischenspeicher zugeordnet, sondern weist die gesamte Anlage ausschließlich Warm-Zwischenspeicher auf, die den Solarmodulen zugeordnet sind.

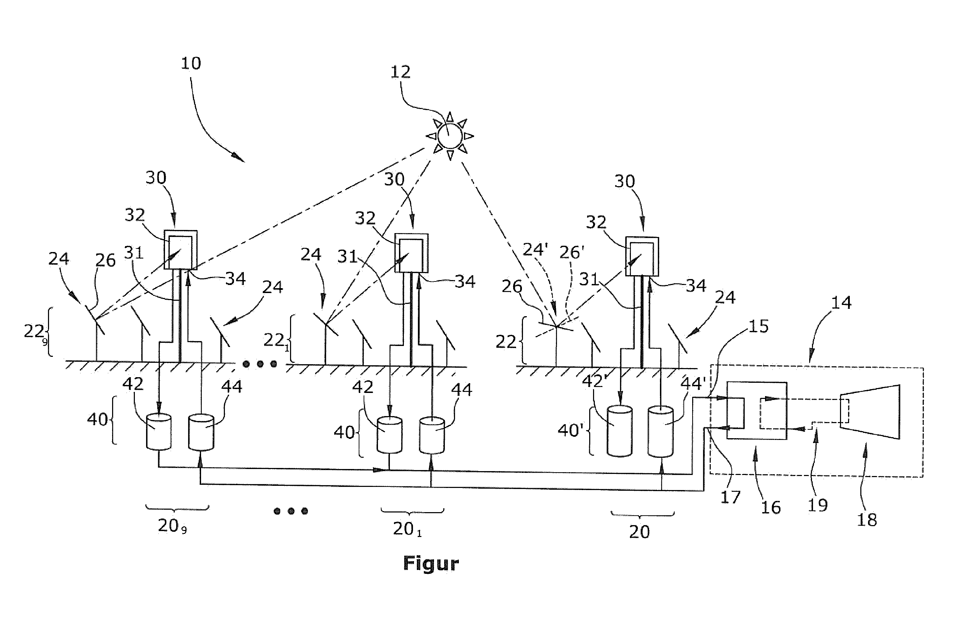

Im Folgenden wird unter Bezugnahme auf die Figur ein Ausführungsbeispiel der Erfindung näher erläutert.

Die Figur zeigt schematisch eine modulare Solarthermie- Anlage.

In der Figur ist eine modular aufgebaute Solarthermie-Anlage 10 dargestellt, die ein zentrales Kraftwerk 14 und eine Vielzahl von Solarmodulen 20,20₁...20₉ aufweist. Die Solarthermie-Anlage 10 dient sowohl der Energiegewinnung als auch der Energiespeicherung. Jedes Solarmodul 20,20₁...20₉ ist, bezogen auf die Wärmegewinnung und Wärmespeicherung, im Prinzip autark, und kann unabhängig von den anderen Solarmodulen 20,20₁...20₉ betrieben werden.

Das Kraftwerk 14 weist einen Wärmetauscher 16 auf, der einen Dampfkreis 19 mit einem Wärmeträger-Kreis thermisch gekoppelt. Über den Dampfkreis 19 ist der Wärmetauscher 16 fluidisch mit einem Turbinengenerator 18 verbunden, der elektrische Energie erzeugt. Das Kraftwerk 14 weist einen Zulauf 15 und einen Ablauf 17 auf, die beide mit dem Wärmeträger-Kreis fluidisch verbunden sind, in dem als Wärmeträger-Flüssigkeit ein Flüssigsalz fließt.

Jedes Solarmodul 20,20₁...20₉ weist einen Turmempfänger 30 mit einem Hohlraum- Solarempfänger 32 auf einem Turm 31, ein Heliostaten-Feld 22,22₁...22₉ mit einer Vielzahl von Heliostaten 24 und eine Zwischenspeicher-Anordnung 40 mit einem Warm-Zwischenspeicher 42 und einem Kalt-Zwischenspeicher 44 auf. Das dem Kraftwerk 14 nächstgelegene Solarmodul 20 ist ein primäres Solarmodul 20, das gemeinsam mit dem Kraftwerk 14 als erstes aller Solarmodule gebaut wurde. Sobald das primäre Solarmodul 20 und das Kraftwerk 14 fertig gestellt waren, konnte die Anlage 10 bereits in Betrieb genommen werden. Die übrigen Solarmodule 22₁...22₉ wurden sukzessive gebaut und in Betrieb genommen.

Jeder Hohlraum- Solarempfänger 32 weist eine untenliegende Strahlungsöffnung 34 auf, durch die die von den Heliostaten 24 reflektierte Sonnenstrahlung in die unten offene Heliostaten-Kavität eindringt. Der Turm 31 des Turmempfängers 30 ist nicht höher als 175 m, so dass auch die Strahlungsöffnung 34 nicht höher als 175 m über dem Erdboden angeordnet ist. Alle Turmempfänger 30 aller Solarmodule 20,20₁...20₉ sind identisch ausgebildet.

Das Heliostaten-Feld 22,22₁...22₉ wird jeweils von einer Vielzahl von Heliostaten 24 gebildet, die jeweils einen nachgeführten Spiegel 26 aufweisen, durch den die Sonnenstrahlung der Sonne 12 auf den jeweils zugeordneten Heliostaten-Solarempfänger 32 des betreffenden Solarmoduls 20,20₁...20₉ gerichtet wird. Jedes Heliostaten-Feld 22,22₁...22₉ ist individuell an die jeweiligen Randbedingungen, beispielsweise an den Geländeverlauf angepasst.

Ein Heliostat 24' eines Heliostaten-Feldes 22 kann derart ausgebildet sein, dass der Spiegel 26 die Sonnenstrahlung auf den zugeordneten Solarempfänger 32 umlenkt oder dass der Spiegel 26' die Sonnenstrahlung auf einen benachbarten Solarempfänger 32 eines benachbarten Solarmoduls 20₁ umlenkt.

Jedem Solarmodul 20,20₁...20₉ ist eine Zwischenspeicher- Anordnung 40,40' zugeordnet, die aus einem Warm-Zwischenspeicher 42 und einem Kalt-Zwischenspeicher 44 besteht. Die Temperatur der Wärmeträger-Flüssigkeit in dem Kalt-Zwischenspeichern 44,44' liegt bei mindestens ca. 300°C, während die Maximal Temperatur in den Warm-Zwischenspeichern 44,44' bis zu knapp 600°C betragen kann. Alle Zwischenspeicher 42, 44,42', 44' sind über entsprechende Leitungen fluidisch parallel miteinander und mit dem Wärmeträger-Zulauf 15 und -Ablauf 17 des Kraftwerks 14 verbunden. Ferner sind in den Leitungen Pumpen und Ventile vorgesehen, die es erlauben, eine beliebige Kombination von Zwischenspeichern 42,44,42',44' miteinander zu koppeln bzw. voneinander abzukoppeln.

Das Kraftwerk 14 weist keinen eigenen Kalt- oder Warm-Zwischenspeicher auf, so dass die Anzahl der Wärmespeicher-Anordnungen 40,40' der Anzahl der Solarmodule 20,20₁...20₉ entspricht.

## Patentansprüche

1. Solarthermie- Anlage (10) mit
mindestens zwei selbstständigen Solarmodulen (20,20₁...20₉), wobei jedes Solarmodul (20,20₁...20₉)
einen Turmempfänger (30) mit einem Solarempfänger (32), ein Heliostaten- Feld (22, 22₁...22₉), das dem Turmempfänger (30) zugeordnet ist, und
einen Warm- Zwischenspeicher (42) zum Speichern der in dem Turmempfänger (30) aufgenommenen Wärmeenergie, wobei der Solarempfänger (32) und der Warm-Zwischenspeicher (42) von einer Wärmeträger-Flüssigkeit durchflossen werden,
aufweist, und
einem zentralen Kraftwerk (14), dessen Zulauf (15) mit den Warm-Zwischenspeichern (42,42') aller Solarmodule (20,20₁...20₉) fluidisch verbunden ist und in dem die thermische Energie der Wärmeträger-Flüssigkeit durch einen Generator (18) in elektrische Energie umgewandelt wird.

2. Solarthermie- Anlage (10) nach Anspruch 1, wobei jedem Solarmodul (20,20₁...20₉) ein Kalt-Zwischenspeicher (44) zugeordnet ist, der mit einem Kraftwerk- Ablauf (17) fluidisch verbunden ist.

3. Solarthermie- Anlage (10) nach einem der vorangegangenen Ansprüche, wobei der Solarempfänger (30) als ein Hohlraum-Solarempfänger (32) mit einer untenliegenden Strahlungsöffnung (34) ausgebildet ist.

4. Solarthermie- Anlage (10) nach einem der vorangegangenen Ansprüche, wobei die Turmempfänger (30) aller Solarmodule (20,20₁..20₉) identisch ausgebildet sind und die Heliostaten- Felder (22,22₁...22₉) nicht-identisch zueinander ausgebildet sind.

5. Solarthermie- Anlage (10) nach einem der vorangegangenen Ansprüche, wobei mindestens ein Heliostat (24') eines Heliostaten-Feldes (22,22₁...22₉) die Sonnenstrahlung auf mindestens zwei verschiedene Turmempfänger (30) richten kann.

6. Solarthermie- Anlage (10) nach einem der vorangegangenen Ansprüche, wobei die Wärmeträger-Flüssigkeit ein Flüssigsalz ist.

7. Solarthermie- Anlage (10) nach einem der vorangegangenen Ansprüche, wobei in einem Solarmodul (20,20₁...20₉) die Entfernung aller Heliostaten eines Heliostaten-Feldes (24) von dem zugeordneten Turmempfänger (30) unter 700 m, bevorzugt unter 500 m, liegt.

8. Solarthermie- Anlage (10) nach einem der vorangegangenen Ansprüche, wobei die Höhe des Turms (31) unter 200 m, besonders bevorzugt unter 175 m liegt.

9. Solarthermie- Anlage (10) nach einem der vorangegangenen Ansprüche, wobei der dem Kraftwerk (14) zugeordnete Warm-Zwischenspeicher (42') eine volumetrische Kapazität aufweist, die kleiner ist als ein Drittel der volumetrischen Kapazität aller Warm-Zwischenspeicher (42) aller Solarmodule (30) zusammen.
